# EUROPEAN PATENT APPLICATION

(11) **EP 4 819 226 A1**
(43) Date of publication of application: **07.10.2026**
(21) Application number: 26169479.8
(22) Date of filing: 31.03.2026
(51) Int. Cl.: H01M 4/139, H01M 4/62

(54) **CONDUCTIVE MATERIAL DISPERSION, ELECTRODE SLURRY, AND SECONDARY BATTERY**

(30) Priority: 02.04.2025 KR 20250042947
(71) Applicant: SK Innovation Co., Ltd., Seoul 03188 (KR)
(72) Inventor: JEON, Hyun Ji, Daejeon 34124 (KR); KIM, Soo Bean, Daejeon 34124 (KR); SHIN, Sang Hye, Daejeon 34124 (KR); LEE, Yong Hoon, Daejeon 34124 (KR); CHUNG, Hyun Suk, Daejeon 34124 (KR)
(74) Representative: Prüfer & Partner mbB Patentanwälte · Rechtsanwälte

(57) **Abstract**

A conductive material dispersion according to embodiments of the present disclosure may include a linear conductive material; an ionic cellulose polymer; and a nonionic cellulose polymer, wherein a weight ratio of the ionic cellulose polymer to the nonionic cellulose polymer is 60:1 to 4:1, and a weight average molecular weight of the ionic cellulose polymer may be greater than that of the nonionic cellulose polymer. Also disclosed is a method for preparing a conductive material dispersion, and a use of a dispersant defined by or composed of a combination of ionic cellulose polymer and non-ionic cellulose polymer for dispersing a linear conductive material in a solvent.

## Description

### [BACKGROUND OF THE INVENTION]

### 1. Field of the Invention

The disclosure of the present application relates to a conductive material dispersion, an electrode slurry, and a secondary battery, and also relates to a method of preparing a conductive material dispersion and a use thereof.

### 2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles.

The secondary battery may include an active material, a conductive material, and other components, as an electrode material. When a conductive material is added to a slurry-type electrode material in a powder state, the conductive material may be unevenly dispersed within the slurry, thereby reducing the conductivity of the electrode. Therefore, a dispersion in which a conductive material is dispersed in a dispersion medium is first prepared, and then the dispersion is added to and mixed with the slurry to prepare an electrode slurry.

The dispersibility of the conductive material within the dispersion may affect the electrochemical characteristics of a secondary battery.

### [SUMMARY OF THE INVENTION]

An object of the present disclosure is to provide a conductive material dispersion with improved dispersibility and storage stability.

Another object of the present disclosure is to provide an electrode slurry with improved dispersibility and storage stability.

Yet another object of the present disclosure is to provide a secondary battery with improved electrochemical characteristics.

A conductive material dispersion according to an embodiment of the present disclosure includes: a linear conductive material; an ionic cellulose polymer; and a nonionic cellulose polymer, wherein a weight ratio of the ionic cellulose polymer to the nonionic cellulose polymer may be 60:1 to 4:1, and a weight average molecular weight of the ionic cellulose polymer may be greater than a weight average molecular weight of the nonionic cellulose polymer.

In some embodiments, the weight ratio of the ionic cellulose polymer to the nonionic cellulose polymer may be 45:1 to 4:1.

In some embodiments, the content of the ionic cellulose polymer may be 0.2% by weight to 10% by weight based on the total weight of the conductive material dispersion.

In some embodiments, the content of the nonionic cellulose polymer may be 0.01% by weight to 5% by weight based on the total weight of the conductive material dispersion.

In some embodiments, the linear conductive material may include at least one selected from the group consisting of carbon nanotubes, graphene nanoribbons (GNRs), and carbon nanofibers.

In some embodiments, the linear conductive material may be a carbon nanotube.

In some embodiments, the carbon nanotube may be a single-walled carbon nanotube (SWCNT).

In some embodiments, the content of the linear conductive material may be included in an amount of 0.2% by weight to 10% by weight based on the total weight of the conductive material dispersion.

In some embodiments, the ionic cellulose polymer may include a first repeating unit represented by Formula 1 below.

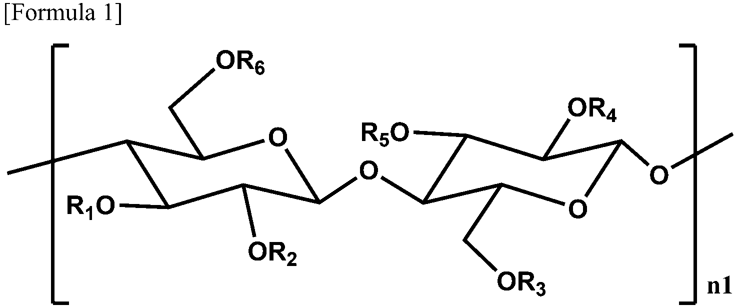

In Formula 1, R₁ to R₆ are each independently H or CH₂COOM, at least one of R₁ to R₆ is selected from CH₂COOM, M is an alkali metal, and n1 is an integer of 50 to 20,000.

In some embodiments, the ionic cellulose polymer may include a first repeating unit represented by Formula 1-1 below: 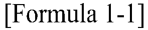 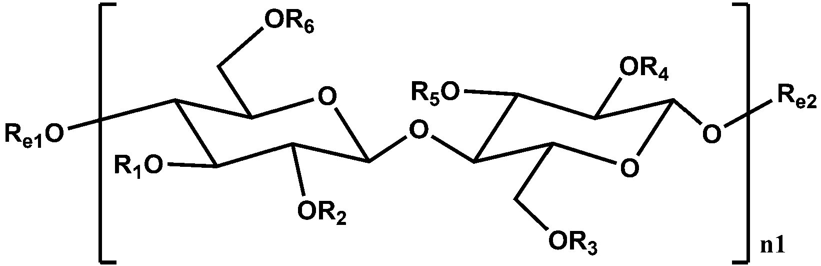 wherein Rₑ₁ and Rₑ₂ are each independently H or a methyl carboxylate, and R₁ to R₆ and n1 refer to the definitions as defined in Formula 1, the methyl carboxylate is CH₂COOLi or CH₂COONa

In some embodiments, the nonionic cellulose polymer may include a second repeating unit represented by Formula 2 below.

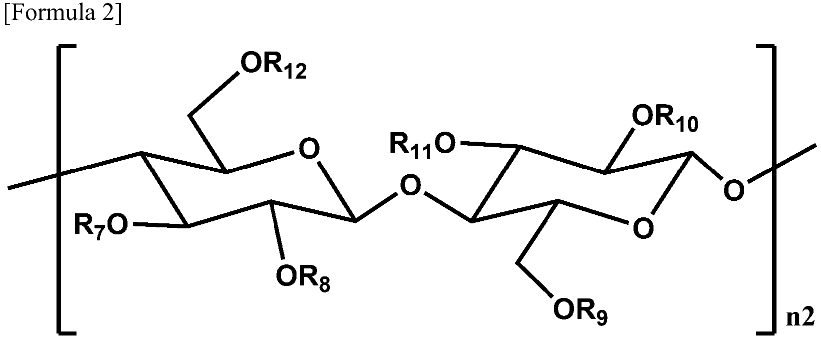

In Formula 2, R₇ to R₁₂ are each independently H, a C₁-C₄ alkyl group, or a C₁-C₄ hydroxyalkyl group, and n2 is an integer of 50 to 20,000.

In some embodiments, the nonionic cellulose polymer may comprise a second repeating unit represented by Formula 2-1 below: 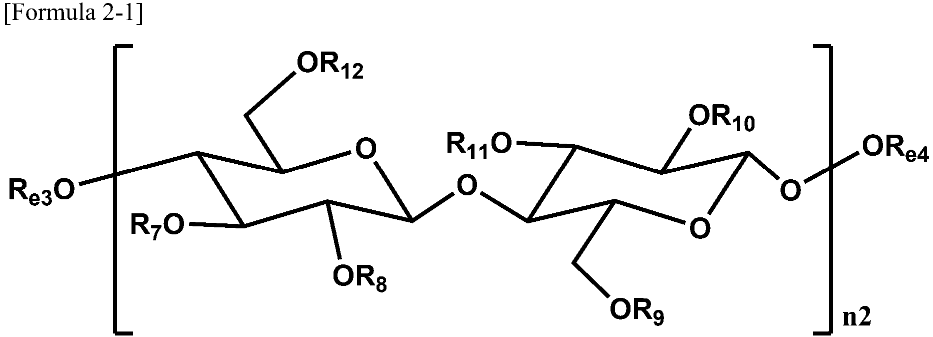 wherein Rₑ₃ and Rₑ₄ are each independently H, a methyl group, an ethyl group, a propyl group, a 1-hydroxyethyl group, a 1-hydroxypropyl group, or a 2-hydroxypropyl group, and R₇ to R₁₂ and n2 refer to the definitions as defined in Formula 2

In some embodiments, the weight average molecular weight of the ionic cellulose polymer may be 10,000 g/mol to 300,000 g/mol.

In some embodiments, the weight average molecular weight of the nonionic cellulose polymer may be 10,000 g/mol to 200,000 g/mol.

In some embodiments, the linear conductive material in the conductive material dispersion may have a median particle diameter (D₅₀) of 1 µm to 10 µm.

In some embodiments, the conductive material dispersion may further include a solvent.

In some embodiments, the conductive material dispersion does not comprise any surfactant.

An electrode composition according to an embodiment of the present disclosure includes the above-described conductive material dispersion.

In some embodiments, the electrode composition may further include an electrode active material and a binder.A secondary battery according to an embodiment of the present disclosure includes: an electrode including an electrode current collector and an active material layer disposed on the electrode current collector and formed from the above-described electrode composition; and a counter electrode disposed opposite the electrode.

In a further aspect of the present disclosure, a method for preparing a conductive material dispersion comprises mixing linear conductive material, ionic cellulose polymer, nonionic cellulose polymer, and solvent to form a mixture, and dispersing the mixture using a mixer or a disperser at a speed of 1,000 rpm to 8,000 rpm for 3 hours to 30 hours to prepare a dispersion.

The mixing of the linear conductive material, the ionic cellulose polymer, the nonionic cellulose polymer, and the solvent may be carried out in a single mixing step or in several sub-mixing steps, optionally choosing any order of mixing the one or more components.

In some embodiments, the method for preparing a conductive material further comprising mixing the dispersion using a high-pressure homogenizer at a pressure of 200 to 600 bar for 1 pass to 20 passes.

In some embodiments, the method is for preparing the conductive material dispersion described above.

In a further aspect of the present disclosure, there is provided a use of a dispersant defined by or composed of a combination of ionic cellulose polymer and non-ionic cellulose polymer for dispersing a linear conductive material in a solvent by improving dispersibility and storage stability through forming electrostatic repulsive forces between the linear conductive material and carboxyl groups and/or carboxylic acid salts in the ionic cellulose polymer, and maintaining a stable dispersion state through hydrogen bonding in the ionic cellulose polymer when the dispersion medium is a polar solvent; and for exhibiting high miscibility and suppressing viscosity increase by forming hydrogen bonds with surrounding components through -OH groups in the non-ionic polymer.

In some embodiments, the use makes use of dispersing linear conductive material above.

The conductive material dispersion according to embodiments of the present disclosure may exhibit improved dispersibility and storage stability.

The electrode slurry according to embodiments of the present disclosure may exhibit improved dispersibility and storage stability.

The output characteristics, cycle characteristics, and charge-discharge efficiency of the secondary battery according to embodiments of the present disclosure may be enhanced.

The conductive material dispersion, the electrode slurry including the same, and the secondary battery of the present disclosure may be widely applied in green technology fields, such as electric vehicles, battery charging stations, as well as solar power generation, wind power and generation, which use the batteries. The conductive material dispersion, the electrode slurry, and the secondary battery of the present disclosure may be used in eco-friendly electric vehicles, and hybrid vehicles, which are aimed at mitigating climate change by reducing air pollution and greenhouse gas emissions.

### [DETAILED DESCRIPTION OF THE INVENTION]

Hereinafter, exemplary embodiments of the present disclosure will be described in detail so that those skilled in the art may easily practice the present disclosure.

### <Conductive Material Dispersion>

The conductive material dispersion according to the embodiments of the present disclosure includes a linear conductive material; an ionic cellulose polymer; and a nonionic cellulose polymer. A weight ratio of the ionic cellulose polymer to the nonionic cellulose polymer may be 60:1 to 4:1, and a weight average molecular weight of the ionic cellulose polymer may be greater than that of the nonionic cellulose polymer.

The ionic cellulose-based polymer may be, for example, a polymer having cellulose as a basic backbone, and may include ionizable functional groups, such as carboxyl groups or salts thereof, on a polymer chain. The ionic cellulose-based polymer may mean a cellulose derivative that is electrically charged in an aqueous solution, for example, exhibits a negative charge, and may be an anionic cellulose-based polymer.

The nonionic cellulose-based polymer may be, for example, a polymer having cellulose as a basic backbone and may mean a cellulose-based derivative that does not substantially include ionizable functional groups in a polymer chain or does not substantially exhibit an electric charge in an aqueous solution.

Linear conductive materials are commonly used as conductive materials for a secondary battery, but they are prone to aggregation within the dispersion due to van der Waals forces resulting from their large surface area and high aspect ratio. The term "linear conductive material(s)" in the present disclosure means a material that is conductive and whose structure can generally described to have a mostly linear expansion, respectively whose structural extension is generally one-dimensional. Linear conductive materials in the present disclosure may be rod or tube shape and have aspect ratio of 5 or more. For example, when water is used alone as a dispersion medium, the high hydrophobicity of the linear conductive material may result in reduced dispersibility. Even when dispersants such as polyvinyl pyrrolidone, polyvinyl alcohol, carboxymethyl cellulose, and/or salts thereof are further added to the dispersion containing the linear conductive materials, aggregates may still form, resulting in reduced conductivity. For example, when carboxymethyl cellulose and/or salts thereof are used alone as a dispersant, it is difficult to improve both dispersibility and storage stability, and an increase in viscosity may result in reduced dispersion efficiency.

The conductive material dispersion according to embodiments of the present disclosure may improve both dispersibility and storage stability by using, as dispersants, both an ionic cellulose polymer and a nonionic cellulose polymer together. The ionic cellulose polymer may improve dispersibility by forming electrostatic repulsive forces between the linear conductive material and carboxyl groups and/or carboxylic acid salts, and may maintain a stable dispersion state through hydrogen bonding when the dispersion medium is a polar solvent. The nonionic cellulose polymer may exhibit high miscibility by forming hydrogen bonds with surrounding components through -OH groups in the polymer, and may also improve dispersion efficiency by not significantly increasing viscosity.

In addition, even if the ionic cellulose polymer such as carboxymethyl cellulose and other surfactants such as non-ionic surfactant, cationic- or anionic surfactant together are used, the linear conductive materials do readily aggregate in the medium. When either ionic cellulose polymer or non-ionic cellulose polymer is used alone, the linear conductive materials still aggregate. As used herein, the term 'surfactant' refers to a low-molecular-weight surface-active agent having a critical micelle concentration The conductive material dispersion preferably does not comprise any such surfactant (i.e. besides the dispersing components ionic cellulose polymer and nonionic cellulose polymer).

In some embodiments, the weight ratio of the ionic cellulose polymer to the nonionic cellulose polymer may be 45:1 to 4:1, for example, 40:1 to 4:1, 30:1 to 4:1, 20:1 to 4:1, 10:1 to 4:1, or 10:1 to 5:1. Accordingly, both the dispersibility and storage stability may be further improved while an increase in viscosity may be suppressed.

In some embodiments, the ionic cellulose polymer may be present in an amount of 50 to 400 parts by weight based on 100 parts by weight of the linear conductive material.

In some embodiments, the nonionic cellulose polymer may be present in an amount of 10 to 100 parts by weight based on 100 parts by weight of the linear conductive material.

In some embodiments, the content of the ionic cellulose polymer may be 0.2% by weight ("wt%") to 10 wt% based on the total weight of the conductive material dispersion. The content of the ionic cellulose polymer may be, for example, 0.2 wt% to 5 wt%, 0.2 wt% to 4 wt%, 0.4 wt% to 4 wt%, 0.4 wt% to 2 wt%, 0.4 wt% to 1 wt%, or 0.6 wt% to 0.8 wt%.

Therefore, the dispersibility of the conductive material within the conductive material dispersion may be further improved.

In some embodiments, the content of the nonionic cellulose polymer may be 0.01 wt% to 5 wt% based on the total weight of the conductive material dispersion. The content of the nonionic cellulose polymer may be 4 wt% or less, 3 wt% or less, 2 wt% or less, 1 wt% or less, or 0.5 wt% or less or may be in a range of 0.01 wt% to 0.5 wt%, 0.01 wt% to 0.4 wt%, 0.05 wt% to 0.3 wt%, or 0.1 wt% to 0.2 wt%.

Accordingly, an increase in viscosity of the conductive material dispersion may be further suppressed.

In some embodiments, the linear conductive material may include at least one selected from the group consisting of carbon nanotubes, graphene nanoribbons (GNRs), and carbon nanofibers. The graphene nanoribbon is a nanomaterial having a one-dimensional (1D) structure cut from a graphene sheet to a predetermined width and may have a linear structure.

In some embodiments, the linear conductive material may include carbon nanotubes.

In some embodiments, the carbon nanotubes may have an average cross-sectional diameter of, for example, 1 nm to 20 nm, 1 nm to 15 nm, 1 nm to 10 nm, or 1 nm to 3 nm.

In some embodiments, the carbon nanotubes may include single-walled carbon nanotubes (SWCNTs), double-walled carbon nanotubes (DWCNTs), and/or multi-walled carbon nanotubes (MWCNTs).

In some embodiments, the carbon nanotubes may be single-walled carbon nanotubes (SWCNTs). Accordingly, the dispersibility of the linear conductive material within the conductive material dispersion may be further enhanced, and the formation of a uniform conductive network within the electrode may be promoted, thereby improving electrical conductivity. In addition, the structural stability of the electrode may be enhanced, thereby reducing performance degradation during charge-discharge cycles.

In some embodiments, the linear conductive material may be present in an amount of 0.2 wt% to 10 wt% based on the total weight of the conductive material dispersion. For example, the content of the linear conductive material may be 8 wt% or less, 6 wt% or less, or 5 wt% or less or may be in a range of 0.2 wt% to 5 wt%, 0.4 wt% to 2wt% , 0.4 wt% to 1 wt%, or 0.4 wt% to 0.8 wt%. Accordingly, the conductive material dispersion may exhibit high electrical conductivity and improved miscibility with surrounding components. In addition, by using the conductive material in the above-described content range, an increase in viscosity may be prevented, and ease of the preparation process and uniformity of electrode coating may be improved.

In some embodiments, the ionic cellulose polymer may include a first repeating unit represented by Formula 1 below:

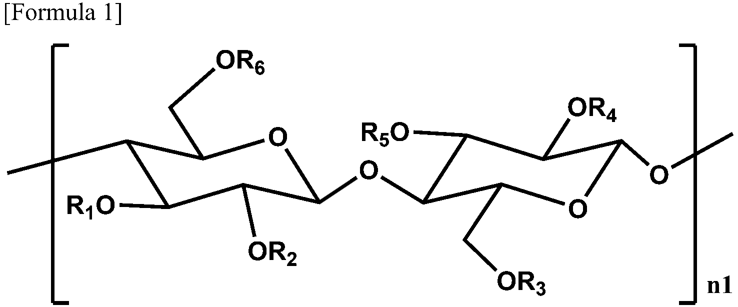

In Formula 1, R₁ to R₆ are each independently H or CH₂COOM, M is an alkali metal, and n1 is an integer of 50 to 20,000.

In some embodiments, at least one of R₁ to R₆ may be selected from CH₂COOM.

In some embodiments, R₃ and R₆ may be selected from CH₂COOM, and a plurality of M may be the same as or different from each other.

As a non-limiting example, the alkali metal may be lithium or sodium.

In Formula 1, each -CH₂COOM may have a carboxylate form formed by ionic bonding and may be present in the form of -CH₂COO-M⁺.

In some embodiments, R₃ and R₆ may be CH2COONa.

In some embodiments, R₃ and R₆ may be CH2COOLi.

In some embodiments, the ionic cellulose polymer may be represented by Formula 1-1 below.

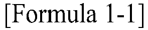

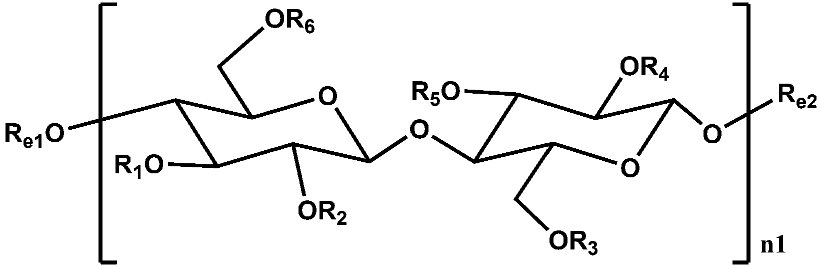

In Formula 1-1, Rₑ₁ and Rₑ₂ are each independently H or a methyl carboxylate, and R₁ to R₆ and n1 refer to the definitions as defined in Formula 1.

The methyl carboxylate may be CH₂COOM, for example, CH₂COOLi or CH₂COONa.

In some embodiments, Rₑ₁ and Rₑ₂ may be each independently H or CH₂COOM.

In some embodiments, Rₑ₁ and Rₑ₂ may be each independently H or CH₂COONa.

In some embodiments, Rₑ₁ and Rₑ₂ may be each independently H or CH₂COOLi.

In some embodiments, the nonionic cellulose polymer may include a second repeating unit represented by Formula 2 below.

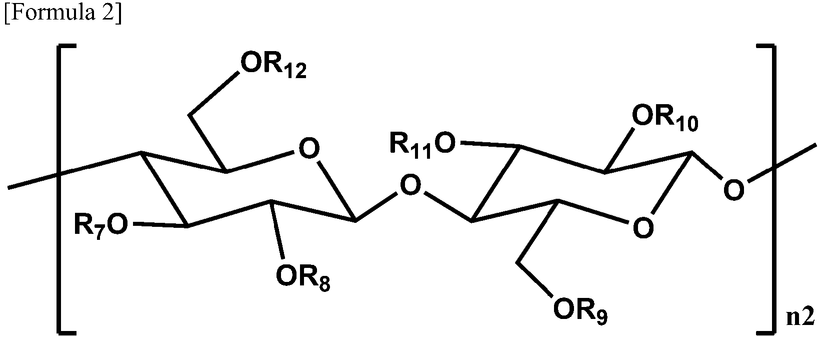

In Formula 2, R₇ to R₁₂ are each independently H, a C₁-C₄ alkyl group, or a C₁-C₄ hydroxyalkyl group, and n2 is an integer of 50 to 20,000.

In some embodiments, at least one of R₇ to R₁₂ may be selected from a C₁-C₄ alkyl group and a C₁-C₄ hydroxyalkyl group. The alkyl group and/or the hydroxyalkyl group may be linear or branched.

In some embodiments, R₇ to R₁₂ may each independently be H, a methyl group, an ethyl group, a propyl group, a 1-hydroxyethyl group, a 1-hydroxypropyl group, or a 2-hydroxypropyl group.

In some embodiments, the nonionic cellulose polymer may be represented by Formula 2-1 below.

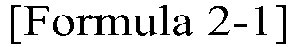

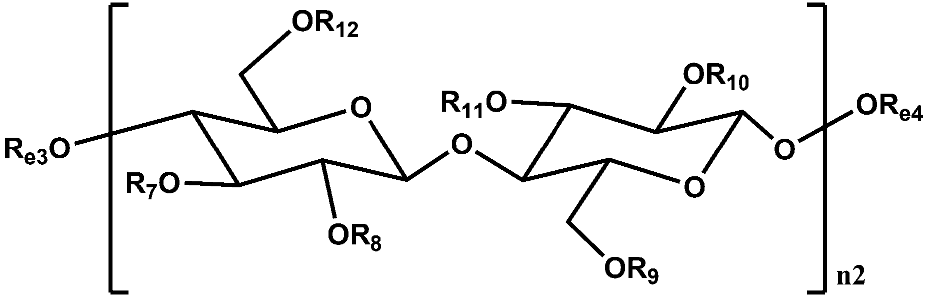

In Formula 2-1, Rₑ₃ and Rₑ₄ are each independently H, a methyl group, an ethyl group, a propyl group, a 1-hydroxyethyl group, a 1-hydroxypropyl group, or a 2-hydroxypropyl group, and R₇ to R₁₂ and n2 refer to the definitions as defined in Formula 2.

In some embodiments, a difference between the weight average molecular weight of the ionic cellulose polymer and the weight average molecular weight of the nonionic cellulose polymer may be 100,000 g/mol or less, for example, 70,000 g/mol or less, 50,000 g/mol or less, 30,000 g/mol or less, 20,000 g/mol or less, or 10,000 g/mol or less. The difference may be defined as a value obtained by subtracting the weight average molecular weight of the nonionic cellulose polymer from the weight average molecular weight of the ionic cellulose polymer.

In some embodiments, the weight average molecular weight of the ionic cellulose polymer may be 10,000 g/mol to 300,000 g/mol, for example, 50,000 g/mol to 250,000 g/mol, 70,000 g/mol to 230,000 g/mol, or 100,000 g/mol to 200,000 g/mol. Accordingly, the dispersibility and viscosity of the conductive material dispersion may be improved.

In some embodiments, the weight average molecular weight of the nonionic cellulose polymer may be 10,000 g/mol to 200,000 g/mol, for example, 10,000 g/mol to 150,000 g/mol, 10,000 g/mol to 130,000 g/mol, 20,000 g/mol to 100,000 g/mol, or 20,000 g/mol to 99,000 g/mol. Accordingly, the dispersibility and viscosity of the conductive material dispersion may be improved.

The weight average molecular weight (Mw) may be measured by gel permeation chromatography (GPC) at room temperature (e.g., 20 °C to 25 °C). As a non-limiting example, a sample may be dissolved in an appropriate solvent and then injected into a GPC system to analyze the molecular weight distribution, and the weight average molecular weight (Mw) may be calculated based on a calibration curve obtained using a standard polymer (e.g., a polystyrene standard material).

In some embodiments, the linear conductive material in the conductive material dispersion may have a median particle diameter (D₅₀) of 1 µm to 10 µm. For example, the median particle diameter of the linear conductive material may be 1 µm to 5 µm, or 1 µm to 3 µm. As the median particle diameter of the linear conductive material in the conductive material dispersion decreases, agglomeration among linear conductive materials within the dispersion may be reduced, thereby improving dispersibility.

The median particle diameter (D₅₀) may refer to, for example, the equivalent spherical diameter based on a cumulative volume distribution of aggregates of the linear conductive material formed within the conductive material dispersion, as measured by laser diffraction particle size analysis.

**As** a non-limiting example, the median particle diameter (D₅₀) may be measured using a laser diffraction particle size analyzer (e.g., a Mastersizer series device from Malvern Instruments) in a wet dispersion mode. For example, the measurement may be performed at room temperature (e.g., 20 °C to 25 °C). The particle diameter corresponding to 50% of the cumulative volume distribution obtained by the measurement may be defined as the median particle diameter (D₅₀).

In some embodiments, the absolute value of the difference between the viscosity of the ionic cellulose polymer and the viscosity of the nonionic cellulose polymer measured in an aqueous solution at a concentration of 2.0 wt% may be 0 cP to 200 cP, for example, 150 cP or less, 100 cP or less, or 50 cP or less. When the difference between the viscosity of the ionic cellulose polymer and the viscosity of the nonionic cellulose polymer falls within the above-described range, their miscibility may be increased, thereby further improving the dispersibility of the conductive material dispersion.

The viscosity of the ionic cellulose polymer and the viscosity of the nonionic cellulose polymer refer to the viscosity measured in an aqueous solution at a concentration of 2.0 wt%. The aqueous solution at a concentration of 2.0 wt% may be formed by dissolving the ionic cellulose polymer and the nonionic cellulose polymer in water at a concentration of 2.0 wt%, respectively. The viscosity of the ionic cellulose polymer and the viscosity of the nonionic cellulose polymer may be measured, for example, at room temperature (e.g., 20 °C to 25 °C).

As a non-limiting example, the viscosity may be measured using a rotational viscometer (e.g., a Brookfield type rotational viscometer) at room temperature (e.g., 20 °C to 25 °C). For example, prior to measurement, a sample aqueous solution may be sufficiently stirred to achieve homogenization, air bubbles may be removed, and a stabilized viscosity value (cP) may be measured under predetermined spindle and rotational speed (rpm) conditions.

In some embodiments, the linear conductive material may be present in an amount of 0.2 wt% to 10 wt% based on the total weight of the conductive material dispersion.

In some embodiments, the conductive material dispersion may further include a solvent. The solvent may include an aqueous solvent or a polar organic solvent.

The term 'polar solvent' used herein refers to a solvent having sufficient polarity to dissolve or disperse the conductive material, including but not limited to water and polar organic solvents, for instance solvents exemplified below. As a non-limiting example, the aqueous solvent may include water and/or other aqueous solvent with water and a water-miscible solvent.

As a non-limiting example, the polar organic solvent may include alcohol-based solvents such as methanol, ethanol, 1-propanol, 2-propanol, n-butanol, iso-butanol, sec-butanol, tert-butanol, pentanol, and/or hexanol; ketone-based solvents such as methyl ethyl ketone; ester-based solvents such as methyl acetate; amine-based solvents such as N,N-dimethylaminopropylamine, and/or diethylenetriamine (DETA); amide-based solvents such as dimethylformamide, diethylformamide, dimethylacetamide (DMAc), and/or N-methyl-2-pyrrolidone (NMP).

As a non-limiting example, the content of the solvent may be 80 wt% to 99 wt% based on the total weight of the conductive material dispersion.

The conductive material dispersion may be prepared, for example, by mixing the linear conductive material, the ionic cellulose polymer, the nonionic cellulose polymer, and the solvent. For example, the linear conductive material, the ionic cellulose polymer, and the nonionic cellulose polymer may be added to the solvent and subjected to stirring, vibration, sliding, rolling, lifting, or ultrasonic treatment to prepare a mixture.

In some embodiments, a dispersion process may be additionally performed on the mixture. For example, the components within the mixture may be more uniformly dispersed using a mixer, a disperser, a high-pressure disperser, a nano-high-pressure disperser, or an ultrasonic disperser to prepare the conductive material dispersion.

In some embodiments, the mixing and dispersion may be performed together. For example, the dispersion process may be performed while the linear conductive material, the ionic cellulose polymer, and the nonionic cellulose polymer are added to the solvent.

**As** a non-limiting example, the conductive material dispersion may be prepared by a method for preparing a conductive material dispersion, including: adding and mixing the ionic cellulose polymer, the nonionic cellulose polymer, and the linear conductive material to the solvent in a mixer to prepare a first dispersion; and mixing the first dispersion at a speed of 1,000 rpm to 8,000 rpm for 3 hours to 30 hours, or at a speed of 1,000 rpm to 4,000 rpm for 10 hours to 30 hours, to prepare a second dispersion.

The method for preparing a conductive material dispersion may further include mixing the second dispersion using a high-pressure homogenizer at a pressure of 200 to 600 bar for 1 pass to 20 passes.

The above-described mixing may be performed, for example, at room temperature (e.g., 20 °C to 25 °C).

### <Electrode Composition>

The electrode composition according to embodiments of the present disclosure includes the above-described conductive material dispersion.

Therefore, the dispersibility among the components within the electrode composition may be improved, and long-term storage stability may be enhanced.

As a non-limiting example, the electrode composition may be prepared by adding and mixing the conductive material dispersion with a composition including an active material and a solvent, or by adding and mixing the active material with the conductive material dispersion.

The electrode composition may be, for example, an electrode slurry.

The electrode composition may further include an electrode active material, a binder, a solvent and other additives.

The electrode active material may be a cathode active material or an anode active material.

The cathode active material may include a compound capable of reversibly intercalating and deintercalating lithium ions.

In some embodiments, the cathode active material may include a lithium cobalt oxide-based active material, a lithium manganese oxide-based active material, a lithium nickel oxide-based active material, a nickel-cobalt-manganese (NCM)-based lithium oxide, or a lithium iron phosphate (LFP)-based active material (e.g., LiFePO₄).

In some embodiments, the cathode active material may include a layered structure or a crystal structure represented by Formula A below.

[Formula A] LiₓNiₐM_{b}O_{2+z}

In Formula A, x, a, b and z may satisfy 0.9≤x≤1.2, 0.6≤a≤0.99, 0.01≤b≤0.4, and - 0.5≤z≤0.1. As described above, M may include Co, Mn and/or Al.

The chemical structure represented by Formula A indicates a bonding relationship among elements included in the layered structure or the crystal structure of the cathode active material, and does not exclude the presence of additional elements. For example, M includes Co and/or Mn, and Co and/or Mn may be provided as main active elements of the cathode active material together with Ni. Here, it should be understood that Formula A is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula A.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element that contributes to the capacity/output activity of the cathode active material together with Co or Mn, such as Al.

As the anode active material, a material capable of adsorbing and desorbing lithium ions may be used. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphitic carbon such as natural graphite, artificial graphite, graphitized coke, graphitized MCMB, graphitized MPCF or the like.

The lithium metal may include pure lithium metal or lithium metal having a protective layer formed thereon for suppressing dendrite growth, etc.

In some embodiments, a lithium metal-containing layer deposited or coated on an anode current collector may be used as the anode active material layer.

In some embodiments, a lithium thin film layer may also be used as the anode active material layer.

Elements contained in the lithium alloy may include aluminum, zinc, bismuth, cadmium, antimony, silicon, lead, tin, gallium or indium, etc.

The silicon-containing material may provide further increased capacity characteristics. The silicon-containing material may include Si, SiOₓ (0<x<2), a metal-doped SiOₓ (0<x<2), a silicon-carbon composite, etc. The metal may include lithium and/or magnesium, and the metal-doped SiOₓ (0<x<2) may include a metal silicate.

When the electrode slurry is a cathode slurry, the solvent may include N-methyl-2-pyrrolidone (NMP), dimethylformamide, dimethylacetamide, N,N-dimethylaminopropylamine, ethylene oxide, tetrahydrofuran, etc., but is not limited thereto.

When the electrode slurry is a cathode slurry, the binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR), etc., but is not limited thereto.

When the electrode slurry is an anode slurry, the solvent may include water, purified water such as deionized water, distilled water, ethanol, isopropanol, methanol, acetone, n-propanol, t-butanol, etc., but is not limited thereto.

When the electrode slurry is an anode slurry, the binder may include a styrene-butadiene rubber (SBR)-based binder, carboxymethyl cellulose (CMC), polyacrylic acid-based binder, poly(3,4-ethylenedioxythiophene) (PEDOT)-based binder, etc., but is not limited thereto.

### <Secondary Battery>

The secondary battery according to embodiments of the present disclosure includes: an electrode including an electrode current collector and an active material layer disposed on the electrode current collector and formed from the above-described electrode composition; and a counter electrode disposed opposite the electrode.

In some embodiments, the electrode current collector may be a cathode current collector or an anode current collector.

In some embodiments, the electrode may be a cathode or an anode, and the counter electrode may be an anode or a cathode corresponding thereto.

As a non-limiting example, the cathode current collector may include stainless steel, nickel, aluminum, titanium, or an alloy thereof. For example, the cathode current collector may include aluminum or stainless steel having a surface treated with carbon, nickel, titanium, or silver.

As a non-limiting example, the cathode current collector may have a thickness of 5 µm to 80 µm.

As a non-limiting example, the anode current collector may include a copper foil, nickel foil, stainless steel foil, titanium foil, nickel foam, copper foam, a polymer substrate coated with a conductive metal or the like.

As a non-limiting example, the anode current collector may have a thickness of 5 µm to 80 µm.

The cathode may be fabricated, for example, by coating the cathode slurry onto the cathode current collector, followed by drying and roll-pressing to form a cathode mixture layer. The coating process may be performed using methods such as gravure coating, slot die coating, simultaneous multilayer die coating, imprinting, doctor blade coating, dip coating, bar coating or casting, etc., but is not limited thereto.

The anode may be fabricated, for example, by coating or depositing the anode slurry onto the anode current collector, followed by drying and roll-pressing to form an anode mixture layer. The coating process may refer to the description provided above with respect to the cathode.

In some embodiments, the active material layer may have a thickness of, for example, 10 µm to 80 µm.

In some embodiments, the mixture density of the electrode may be, for example, 2.0 g/cm³ to 6.0 g/cm³.

The electrode composition may include the binder in an amount of, for example, 1 wt% to 15 wt% based on the total weight of the solids.

The content of the solids may be, for example, 40 wt% to 90 wt% based on the total weight of the electrode composition.

In some embodiments, the secondary battery may include: a cathode; and an anode disposed opposite the cathode. The cathode and/or anode may be fabricated using a cathode slurry and/or anode slurry including the above-described conductive material dispersion.

Therefore, the secondary battery may exhibit improved output characteristics, cycle characteristics, and charge-discharge efficiency.

In some embodiments, the secondary battery may include an electrode assembly including a cathode, an anode, and a separator interposed between the cathode and the anode, and at least a portion of an electrolyte solution may be impregnated into the electrode assembly.

In some embodiments, the cathode may include a cathode current collector and a cathode active material layer disposed on at least one surface of the cathode current collector and including a cathode active material. The cathode may have, for example, a structure in which the cathode active material layer is stacked on the cathode current collector.

In some embodiments, the anode may include an anode current collector and an anode active material layer disposed on at least one surface of the anode current collector and including an anode active material. The anode may have, for example, a structure in which the anode active material layer is stacked on the anode current collector.

The separator may be configured to prevent an electrical short-circuit between the cathode and the anode, and to allow the flow of ions. For example, the separator may have a thickness of 5 µm to 30 µm.

For example, the separator may include a porous polymer film or a porous non-woven fabric.

The porous polymer film may include a polyolefin-based polymer such as an ethylene polymer, propylene polymer, ethylene/butene copolymer, ethylene/hexene copolymer, or ethylene/methacrylate copolymer, etc. These may be used alone or in combination of two or more thereof.

The separator may also include a ceramic material. For example, inorganic particles may be coated on the polymer film or dispersed in the polymer film to improve heat resistance.

The separator may have a single-layer or multilayer structure including the above-described polymer film and/or non-woven fabric.

In some embodiments, an electrode cell may be defined by the cathode, the anode and the separator, and a plurality of electrode cells may be stacked to form, for example, a jelly roll type electrode assembly. For example, the electrode assembly may be formed by winding, stacking, z-folding, or stack-folding the separator.

The electrode assembly may be accommodated in a case together with the electrolyte solution for a secondary battery according to exemplary embodiments, thereby defining a secondary battery. As the electrolyte solution, a non-aqueous electrolyte may be used, and for example, the electrode assembly may be accommodated in a case together with the electrolyte. The non-aqueous electrolyte may include, for example, a lithium salt as an electrolyte and an organic solvent.

The lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

As the organic solvent, for example, propylene carbonate (PC), ethylene carbonate (EC), butylene carbonate, diethyl carbonate (DEC), dimethyl carbonate (DMC), ethylmethyl carbonate (EMC), methylpropyl carbonate, ethylpropyl carbonate, dipropyl carbonate, vinylene carbonate, methyl acetate (MA), ethyl acetate (EA), n-propyl acetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane (DME), tetrahydrofuran (THF), 2-methyltetrahydrofuran, ethyl alcohol, isopropyl alcohol, dimethyl sulfoxide, acetonitrile, diethoxyethane, sulfolane, γ-butyrolactone, and propylene sulfite may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, and/or a borate compound. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

In some embodiments, a semi-solid electrolyte and/or a solid electrolyte may be used instead of the non-aqueous electrolyte. The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in combination of two or more thereof.

In some embodiments, the solid electrolyte may include an oxide-based amorphous solid electrolyte, such as, for example, Li₂O-B₂O₃-P₂O₅, Li₂O-SiO₂, Li₂O-B₂O₃, Li₂O-B₂O₃-ZnO, etc.

In this case, the secondary battery may be manufactured in the form of an all-solid-state battery. A solid electrolyte layer may be disposed between the cathode and the anode in place of the above-described separator.

Electrode tabs (cathode tabs and anode tabs) may protrude from the cathode current collector and the anode current collector, respectively, which belong to respective electrode cells, and may extend to one side of the case. The electrode tabs may be welded together with the one side of the case and connected to electrode leads (a cathode lead and an anode lead) that extend or are exposed to the outside of the case.

The secondary battery may be manufactured, for example, in a cylindrical, prismatic, pouch, or coin type using a can.

Hereinafter, the embodiments of the present disclosure will be further described with reference to specific experimental examples. The examples and comparative examples included in the experimental examples are merely illustrative of the present disclosure and do not limit the scope of the appended claims.

### Examples 1 to 6 and Comparative Examples 1 to 12

The components listed in Table 1 below were mixed and dispersed at respective contents using a laboratory mixer (Preparation Method A) or a high-shear mixer (Preparation Method B) to prepare conductive material dispersions of the examples and comparative examples. In each conductive material dispersion, the content excluding SWCNTs, the ionic cellulose polymer, and the nonionic cellulose polymer, that is, the content of water, was expressed as a balance. Mw denotes a weight-average molecular weight.

Specifically, in Examples 1 to 6 and Comparative Examples 1 to 12, the conductive material dispersions were prepared on a laboratory scale according to Preparation Method A described below in order to evaluate relative differences in their effects. In addition, in Example 6 and Comparative Example 3, the conductive material dispersions were also prepared on an industrial scale according to Preparation Method B described below in order to evaluate physical properties of the conductive material dispersions in consideration of actual manufacturing, distribution, and sales.

### <Preparation Method A>

Carbon nanotubes (SWCNTs), the ionic cellulose polymer, and the nonionic cellulose polymer were mixed in distilled water (H₂O) at the contents listed in Table 1 below. A laboratory-scale conductive material dispersion was prepared by mixing the mixture using a laboratory mixer at 8,000 rpm for 3 hours.

### <Preparation Method B>

Carbon nanotubes (SWCNTs), the ionic cellulose polymer, and the nonionic cellulose polymer were mixed in distilled water (H₂O) at the contents listed in Table 1 below. The mixture was mixed using a mixer at a speed of 3,000 rpm for 20 hours, and then mixed using a high-pressure homogenizer at a pressure of 500 bar for 10 passes to prepare an industrial-scale conductive material dispersion.

**TABLE 1**

| | SWCNT | Ionic cellulose polymer | Nonionic cellulose polymer | Water |
|---|---|---|---|---|
| Example 1 | 0.4 wt% | CMC (Mw: 110,000) | HEC (Mw: 90,000) | Balance |
| | | 0.6 wt% | 0.1 wt% | |
| Example 2 | 0.8 wt% | CMC (Mw: 110,000) | HEC (Mw: 90,000) | Balance |
| | | 0.8 wt% | 0.1 wt% | |
| Example 3 | 0.4 wt% | CMC (Mw: 110,000) | MC (Mw: 100,000) | Balance |
| | | 0.6 wt% | 0.1 wt% | |
| Example 4 | 0.8 wt% | CMC (Mw: 110,000) | MC (Mw: 100,000) | Balance |
| | | 0.8 wt% | 0.1 wt% | |
| Example 5 | 0.4 wt% | CMC (Mw: 110,000) | HPC (Mw: 80,000) | Balance |
| | | 0.6 wt% | 0.1 wt% | |
| Example 6 | 0.4 wt% | CMC (Mw: 110,000) | HPMC (Mw: 60,000) | Balance |
| | | 0.6 wt% | 0.1 wt% | |
| Comparative Example 1 | 0.4 wt% | CMC (Mw: 110,000) | - | Balance |
| | | 0.6 wt% | | |
| Comparative Example 2 | 0.8 wt% | CMC (Mw: 110,000) | - | Balance |
| | | 1.2 wt% | | |
| Comparative Example 3 | 0.8 wt% | CMC (Mw: 110,000) | - | Balance |
| | | 0.8 wt% | | |
| Comparative Example 4 | 0.4 wt% | CMC (Mw: 110,000) | Tween40 | Balance |
| | | 0.6 wt% | 0.1 wt% | |
| Comparative Example 5 | 0.4 wt% | CMC (Mw: 110,000) | SDBS | Balance |
| | | 0.6 wt% | 0.1 wt% | |
| Comparative Example 6 | 0.4 wt% | CMC (Mw: 110,000) | CTAB | Balance |
| | | 0.6 wt% | 0.1 wt% | |
| Comparative Example 7 | 0.4 wt% | - | HEC (Mw: 90,000) | Balance |
| | | | 0.6 wt% | |
| Comparative Example 8 | 0.4 wt% | - | HPMC (Mw: 60,000) | Balance |
| | | | 0.6 wt% | |
| Comparative Example 9 | 0.4 wt% | - | MC (Mw: 100,000) | Balance |
| | | | 0.6 wt% | |
| Comparative Example 10 | 0.8 wt% | CMC (Mw: 110,000) | HEC (Mw: 90,000) | Balance |
| | | 0.8 wt% | 0.01 wt% | |
| Comparative Example 11 | 0.8 wt% | CMC (Mw: 110,000) | HEC (Mw: 90,000) | Balance |
| | | 0.8 wt% | 0.4 wt% | |
| Comparative Example 12 | 0.8 wt% | CMC (Mw: 110,000) | HEC (Mw: 380,000) | Balance |
| | | 0.8 wt% | 0.1 wt% | |

The specific names of the components listed in Table 1 are as follows:
SWCNT: Single-walled carbon nanotube, having a length of 5 µm or more
CMC: Carboxymethyl cellulose (Sigma-Aldrich)
HEC: Hydroxyethyl cellulose (Sigma-Aldrich)
MC: Methyl cellulose (Sigma-Aldrich)
HPC: Hydroxypropyl cellulose (Sigma-Aldrich)
HPMC: Hydroxypropyl methyl cellulose (Sigma-Aldrich)
Tween^{®}40: Polyoxyethylenesorbitan monopalmitate (Sigma-Aldrich)
SDBS: Sodium dodecylbenzenesulfonate (Sigma-Aldrich)
CTAB: Hexadecyltrimethylammonium bromide (Sigma-Aldrich)

### Experimental Example

### Experimental Example 1: Dispersibility in Conductive Material Dispersion (Median Particle Diameter of Linear Conductive material)

The conductive material dispersions prepared in the examples and comparative examples were diluted 2,000-fold with water (H₂O).

For each diluted conductive material dispersion, particle sizes were determined by measuring diffraction pattern differences according to particle size using a laser diffraction particle size analyzer (HORIBA LA-950V2). From the measured volume-based particle size distribution curve, particle diameters corresponding to 50% and 99.9% of the volume fraction were calculated, and D₅₀ was determined.

The median particle diameters(D₅₀) of the linear conductive materials in the conductive material dispersions prepared on a laboratory scale in Examples 1 to 6 and Comparative Examples 1 to 12 were classified according to the following evaluation criteria in order to evaluate relative differences in effectiveness. The results are shown in Table 2 below.

The results are shown in Table 2 below.

### <Evaluation Criteria>

∘: Less than 65 µm based on D₅₀
△: 65 µm or more and less than 100 µm based on D₅₀
X: 100 µm or more based on D₅₀

As the dispersibility of the linear conductive material in the conductive material dispersion is improved, agglomeration among linear conductive materials is suppressed, resulting in a decrease in the median particle diameter. Therefore, the median particle diameter of the linear conductive material was used as an indicator for evaluating the dispersibility of the conductive material dispersion.

The median particle diameters(D₅₀) of the linear conductive material in the conductive material dispersions prepared on an industrial scale in Example 6 and Comparative Example 3 are also shown in Table 2 below.

### Experimental Example 2: Viscosity of the Conductive Material Dispersion

The viscosities of the conductive material dispersions prepared according to the examples and comparative examples were measured, respectively. Each viscosity was measured using a rheometer (Anton Paar instrument, equipped with a standard measuring system CC27/T200/SS (cylinder type), 25.0 °C), and was evaluated at a shear rate of 96.2 s⁻¹.

The results are shown in Table 2 below.

### Experimental Example 3: Storage Stability of the Conductive material dispersion

The conductive material dispersions were prepared in the same manner as in the examples and comparative examples.

The prepared conductive material dispersions were stored in a chamber under an air atmosphere at 50 °C for one week. Thereafter, the viscosity of each dispersion was measured using a rheometer (Anton Paar instrument, equipped with a standard measuring system CC27/T200/SS (cylinder type), 25.0 °C), and was evaluated at a shear rate of 96.2 s⁻¹.

The viscosity measured in Experimental Example 2 was used as an initial viscosity, and the viscosity measured in Experimental Example 3 was used as a final viscosity. A viscosity change (ΔV) was calculated according to Equation 1 below, and storage stability was evaluated according to the following evaluation criteria.

[Equation 1] $Viscosity change \left(ΔV,%\right) = \left(Final viscosity-Initial viscosity\right) / Initial viscosity \times 100$

### <Evaluation criteria>

○: Less than 5%
△: 5% or more and less than 20%
X: More than 20%

**TABLE 2**

| Laboratory scale | Preparation method | Initial viscosity (cP) | Final viscosity (cP) | Storage stability | Dispersibility |
|---|---|---|---|---|---|
| Example 1 | A | 497 | 500 | ○ | ○ |
| Example 2 | A | 820 | 830 | ○ | ○ |
| Example 3 | A | 615 | 620 | ○ | ○ |
| Example 4 | A | 780 | 790 | ○ | ○ |
| Example 5 | A | 701 | 720 | ○ | ○ |
| Example 6 | A | 580 | 605 | ○ | ○ |
| Comparative Example 1 | A | 460 | 490 | Δ | Δ |
| Comparative Example 2 | A | 1,200 | 1,500 | X | X |
| Comparative Example 3 | A | 930 | 1,120 | Δ | Δ |
| Comparative Example 4 | A | 362 | 410 | Δ | X |
| Comparative Example 5 | A | 470 | Phase separation | X | X |
| Comparative Example 6 | A | 442 | Phase separation | X | X |
| Comparative Example 7 | A | 412 | 460 | Δ | X |
| Comparative Example 8 | A | 336 | Phase separation | X | X |
| Comparative Example 9 | A | 350 | Phase separation | Δ | Δ |
| Comparative Example 10 | A | 920 | 1,100 | Δ | Δ |
| Comparative Example 11 | A | 1,150 | 1,500 | X | X |
| Comparative Example 12 | A | 980 | 1,200 | X | △ |

| Industrial scale | Preparation method | Initial viscosity (cP) | Final viscosity (cP) | Storage stability | D₅₀ |
|---|---|---|---|---|---|
| Example 7 | B | 770 | 775 | ○ | 3 µm |
| Comparative Example 3 | B | 1,020 | 1,180 | Δ | 22 µm |

Referring to Table 2, the conductive material dispersions according to the examples were evaluated as having improved storage stability and dispersibility.

In contrast, the conductive material dispersions according to the comparative examples exhibited inferior storage stability and/or dispersibility compared to those of the examples.

Specifically, in Comparative Example 1, which included CMC alone as a dispersant, storage stability and dispersibility were inferior to those of the examples.

In Comparative Example 10, in which the weight ratio of the ionic cellulose polymer to the nonionic cellulose polymer in the dispersion was 80:1, storage stability and dispersibility were inferior to those of the examples.

In Comparative Example 11, in which the weight ratio of the ionic cellulose polymer to the nonionic cellulose polymer in the dispersion was 2:1, storage stability and dispersibility were significantly inferior to those of the examples.

In Comparative Example 12, in which the weight-average molecular weight of the ionic cellulose polymer used in the dispersion was lower than that of the nonionic cellulose polymer, storage stability was significantly decreased, and dispersibility was inferior to that of the examples.

Meanwhile, referring to Example 6, when a conductive material dispersion was prepared on an industrial scale, the dispersion according to an embodiment of the present disclosure was able to form linear conductive materials having a median particle diameter of 3 µm or less, thereby confirming that dispersibility was significantly improved.

## Claims

1. A conductive material dispersion comprising:
a linear conductive material;
an ionic cellulose polymer; and
a nonionic cellulose polymer,
wherein a weight ratio of the ionic cellulose polymer to the nonionic cellulose polymer is 60:1 to 4:1, and
a weight average molecular weight of the ionic cellulose polymer is greater than a weight average molecular weight of the nonionic cellulose polymer.

2. The conductive material dispersion according to claim 1, wherein content(s) of components in the conductive material dispersion is defined by one or more of the following amounts (i) to (iii), respectively alone or in combination:
(i) a content of the ionic cellulose polymer is 0.2% by weight to 10% by weight based on the total weight of the conductive material dispersion,
(ii) a content of the nonionic cellulose polymer is 0.01% by weight to 5% by weight based on the total weight of the conductive material dispersion, and/or
(iii) a content of the linear conductive material is included in an amount of 0.2% by weight to 10% by weight based on the total weight of the conductive material dispersion.

3. The conductive material dispersion according to claim 1 or 2,
wherein a difference between the weight average molecular weight of the ionic cellulose polymer and the weight average molecular weight of the nonionic cellulose polymer is 50,000 g/mol or less.

4. The conductive material dispersion according to any one of claims 1 to 3,
wherein the linear conductive material comprises at least one selected from the group consisting of carbon nanotubes, graphene nanoribbons (GNRs), and carbon nanofibers, preferably wherein the linear conductive material is a carbon nanotube.

5. The conductive material dispersion according to any of claims 1 to 4, wherein the ionic cellulose polymer comprises a first repeating unit represented by Formula 1 below: 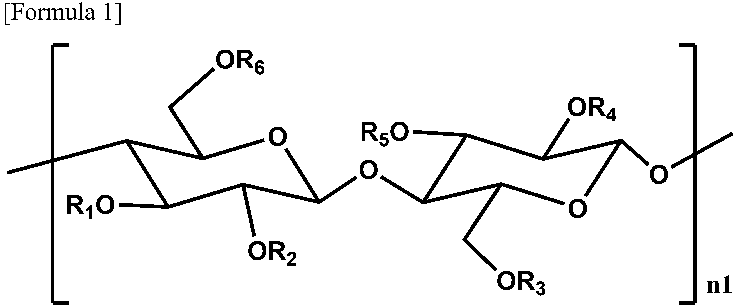 wherein, in Formula 1, R₁ to R₆ are each independently H or CH₂COOM, at least one of R₁ to R₆ is selected from CH₂COOM, M is an alkali metal, and n1 is an integer of 50 to 20,000,
preferably wherein the ionic cellulose polymer comprises a first repeating unit represented by Formula 1-1 below: 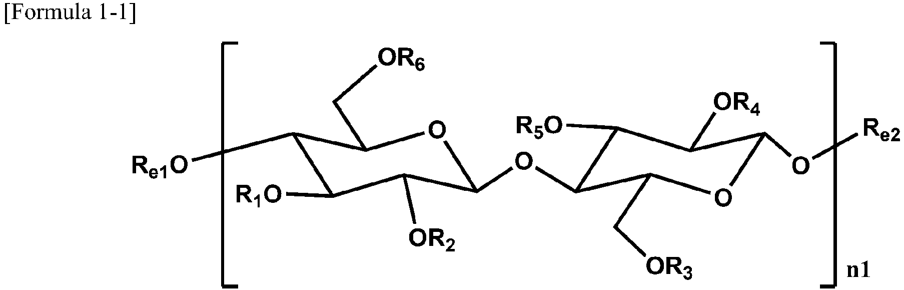
wherein Rₑ₁ and Rₑ₂ are each independently H or a methyl carboxylate, and R₁ to R₆ and n1 refer to the definitions as defined in Formula 1, the methyl carboxylate is CH₂COOLi or CH₂COONa.

6. The conductive material dispersion according to any one of claims 1 to 5, wherein the nonionic cellulose polymer comprises a second repeating unit represented by Formula 2 below: 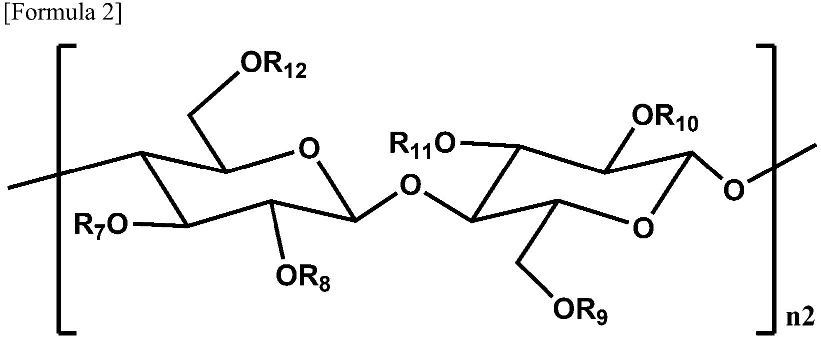 wherein, in Formula 2, R₇ to R₁₂ are each independently H, a C₁-C₄ alkyl group, or a C₁-C₄ hydroxyalkyl group, and n2 is an integer of 50 to 20,000,
preferably wherein the nonionic cellulose polymer comprises a second repeating unit represented by Formula 2-1 below: 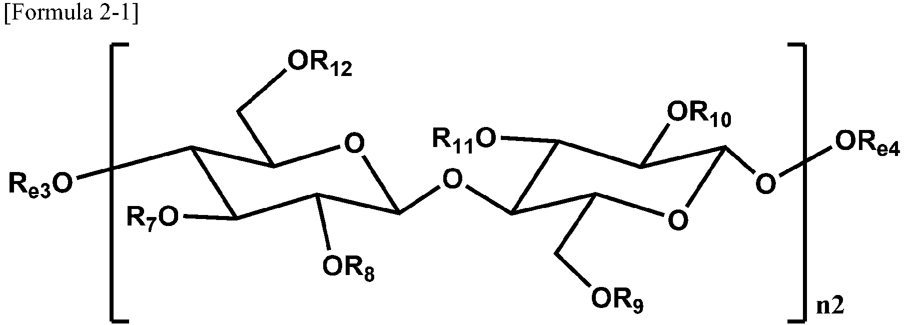
wherein Rₑ₃ and Rₑ₄ are each independently H, a methyl group, an ethyl group, a propyl group, a 1-hydroxyethyl group, a 1-hydroxypropyl group, or a 2-hydroxypropyl group, and R₇ to R₁₂ and n2 refer to the definitions as defined in Formula 2.

7. The conductive material dispersion according to any one of claims 1 to 6, wherein the weight average molecular weight of the ionic cellulose polymer is 10,000 g/mol to 300,000 g/mol, and/or wherein the weight average molecular weight of the nonionic cellulose polymer is 10,000 g/mol to 200,000 g/mol.

8. The conductive material dispersion according to any one of claims 1 to 7, wherein the linear conductive material in the conductive material dispersion has a median particle diameter (D₅₀) of 1 µm to 10 µm.

9. The conductive material dispersion according to any one of claims 1 to 8, further comprising a solvent,
and/or wherein the conductive material dispersion does not comprise any surfactant.

10. An electrode composition comprising the conductive material dispersion of any one of claims 1 to 9.

11. The electrode composition according to claim 10, further comprising an electrode active material and a binder.

12. A secondary battery comprising:
an electrode comprising an electrode current collector and an active material layer disposed on the electrode current collector and formed from the electrode composition of claim 10 or 11; and
a counter electrode disposed opposite the electrode.

13. A method for preparing a conductive material dispersion comprising:
mixing linear conductive material, ionic cellulose polymer, nonionic cellulose polymer, and solvent to form a mixture, and
dispersing the mixture using a mixer, or a disperserat a speed of 1,000 rpm to 8,000 rpm for 3 hours to 30 hours to prepare a dispersion.

14. The method for preparing a conductive material dispersion of claim 13, further comprising mixing the dispersion using a high-pressure homogenizer at a pressure of 200 to 600 bar for 1 pass to 20 passes.

15. Use of a dispersant defined by or composed of a combination of ionic cellulose polymer and non-ionic cellulose polymer for dispersing a linear conductive material in a solvent by improving dispersibility and storage stability through forming electrostatic repulsive forces between the linear conductive material and carboxyl groups and/or carboxylic acid salts in the ionic cellulose polymer, and
maintaining a stable dispersion state through hydrogen bonding in the ionic cellulose polymer when the dispersion medium is a polar solvent;
and for exhibiting high miscibility and suppressing viscosity increase by forming hydrogen bonds with surrounding components through -OH groups in the non-ionic polymer.
